**Europäisches Patentamt**

**European Patent Office**

**Office européen des brevets**

(11) Veröffentlichungsnummer: **0 218 942 B1**

(12) **EUROPÄISCHE PATENTSCHRIFT**

(45) Veröffentlichungstag der Patentschrift: **27.02.91**

(21) Anmeldenummer: **86112820.5**

(22) Anmeldetag: **17.09.86**

(51) Int. Cl.⁵: **G01N 19/02, G01M 13/04**

(54) Verfahren zur Bestimmung des Reibmomentes eines Messlagers.

(30) Priorität: **12.10.85 DE 3536474**

30,31

(43) Veröffentlichungstag der Anmeldung:
**22.04.87 Patentblatt 87/17**

(45) Bekanntmachung des Hinweises auf die
Patenterteilung:
**27.02.91 Patentblatt 91/09**

(84) Benannte Vertragsstaaten:
**CH FR GB LI**

(56) Entgegenhaltungen:
**EP-A- 0 018 936**
**DD-A- 223 820**
**US-A- 3 685 342**

**VDI-BERICHTE, Nr. 312, 1978, Seiten 135-141;
U. MILZ "Messung von Kraft und Masse unter Einfluss von Störbeschleunigungen"**

**REVIEW OF THE ELECTRICAL COMMUNICATION LABORATORIES, Band 28, Nr. 5-6, Mai-Juni 1980, Seiten 405-414, Tokyo, JP; A. TAGO et al.: "Methods of Estimating Mechanical Characteristics for Magnetic Recording Disks"**

**Messtechnische Briefe HBM, Heft 2, Seiten**

(73) Patentinhaber: **Deutsche Forschungsanstalt
für Luft- und Raumfahrt e.V.
Linder Höhe Postfach 90 60 58
D-5000 Köln 90(DE)**

(72) Erfinder: **Buck, Volker, Dr.
Halweg 41
D-4320 Hattingen(DE)**

(74) Vertreter: **Hoeger, Stellrecht & Partner
Uhlandstrasse 14 c
D-7000 Stuttgart 1(DE)**

## Beschreibung

Die Erfindung betrifft ein Verfahren zur Bestimmung des Reibmomentes eines Meßlagers, bei dem man einen Lagerring des Meßlagers mit konstanter Drehzahl dreht, während man den anderen Lagerring über einen Meßkopf mit einer als Kraftaufnehmer wirkenden Feder verbindet, wobei der Kraftaufnehmer ein Signal, das zur Bestimmung des Reibmomentes des Meßlagers verwendet wird, erzeugt.

Bei Konstruktionen mit Wälzlagern ist das Reibmoment eine wesentliche Kenngröße. Für Anwendungen in der Raumfahrt, wo z.B. bei Ausfall eines Solargeneratornachführmechanismus die Energieversorgung des Satelliten drastisch reduziert und damit der Erfolg der ganzen Mission in Frage gestellt wird, ist die genaue Kenntnis des Reibmoments der entsprechenden Lagerung unbedingt erforderlich.

Neben dem Mittelwert sind dabei insbesondere Reibmomentspitzen von Bedeutung. Einerseits können sie bei Überschreiten des Antriebsmomentes des Motors zum Ausfall des Bewegungselements führen, andererseits beeinflussen derartige dynamische Anteile das Regelverhalten der Nachführelektronik. Darüber hinaus ist die Kenntnis derartiger dynamischer Anteile und der ihnen zugrunde liegenden Effekte zur Aufklärung der Ausfallmechanismen der Lager und damit für die Grundlagenforschung an den verwendeten Schmiersystemen interessant.

Zur Qualitätssicherung derartiger Lager ist es daher erforderlich, das Reibmoment bei hoher zeitlicher Auflösung kalibrierbar messen zu können.

Geräte zur Messung von Drehmomenten bzw. Kräften sind in großer Zahl bekannt. Dabei werden die Reibmomente in der Regel reaktiv über die Verbiegung von Federelementen gemessen, wobei im statischen Falle das Reibmoment proportional der Verbiegung des Federelementes ist (Meßtechnik Briefe HBM, 1967, Heft 2, Seiten 30 bis 31).

Durch das Trägheitsmoment des Meßkopfes und durch die innere Dämpfung des Federmaterials entsteht aber ein schwingungsfähiges System, bei dem das Reibmoment des Meßlagers und die Federauslenkung in der Regel nicht mehr proportional sind. Deshalb wird üblicherweise der Fall starker Dämpfung (aperiodischer Grenzfall) realisiert, bei dem nach einer Einstellzeit Proportionalität zwischen Reibmoment und Federverbiegung erreicht wird (US-A-3 685 342). Derartige aperiodisch gedämpfte Systeme sind einfach mittels geeichter Gewichte zu kalibrieren, ihre Einstellzeit ist jedoch für viele Anwendungen zu lang.

Zur Reduzierung der Einstellzeit ist es bekannt, nicht nur die Federverformung zu messen, sondern auch die der Beschleunigung des Meßaufnehmers und die der Geschwindigkeit des Meßaufnehmers proportionalen Glieder (Beschleunigungsterm bzw. Reibungsterm). Unter Verwendung der vollständigen Schwingungsgleichung des Meßsystems kann dann der zeitliche Verlauf des Reibmomentes bestimmt werden. Ein solches Verfahren ergibt zwar ausreichend kurze Einstellzeiten, aber eine Kalibrierung von Dämpfungs- und Beschleunigungsterm ist extrem aufwendig und unübersichtlich, da keine dynamischen Kraftnormale existieren. Ein solches Verfahren ist zur dynamischen Entstörung von Waagen bereits beschrieben worden (U. Milz in VDI-Berichte Nr. 312, 1978, Seite 135 ff).

Es ist Aufgabe der Erfindung, ein gattungsgemäßes Verfahren so zu verbessern, daß bei extrem einfacher und genauer Kalibrierung eine Bestimmung des Reibmomentes eines Lagers mit hoher Zeitauflösung möglich ist.

Diese Aufgabe wird bei einem Verfahren der eingangs beschriebenen Art erfindungsgemäß dadurch gelöst, daß man zur Kalibrierung der gesamten Meßeinrichtung das Meßlager durch ein Luftlager ersetzt, daß der Meßkopf zu freien Schwingungen angeregt wird, daß man bei dieser Luftlageranordnung ein der Federverformung und ein der Meßkopfdrehbeschleunigung proportionales Signal erzeugt, daß man das Verhältnis der beiden Signale so einstellt, daß sie sich gegenseitig aufheben, und daß man bei der Reibmomentmessung des Meßlagers bei unverändertem Verhältnis der beiden Signale das Summensignal der beiden Signale als Maß für das auftretende Reibmoment bestimmt.

Mit diesem Verfahren ist es möglich, eine qualitätsgesicherte Reibmomentenmessung hoher zeitlicher Auflösung, wie etwa für Raumfahrtanwendungen, durchzuführen.

Die nachfolgende Beschreibung bevorzugter Ausführungsformen der Erfindung dient im Zusammenhang mit der Zeichnung der näheren Erläuterung. Es zeigen:

Fig. 1    eine schematische Schnittansicht einer Vorrichtung zur Durchführung des Meßverfahrens und

Fig. 2    eine schematische Schaltskizze einer Schaltung zur Erzeugung eines Summensignals als Maß für das durch das Meßlager übertragene Reibmoment.

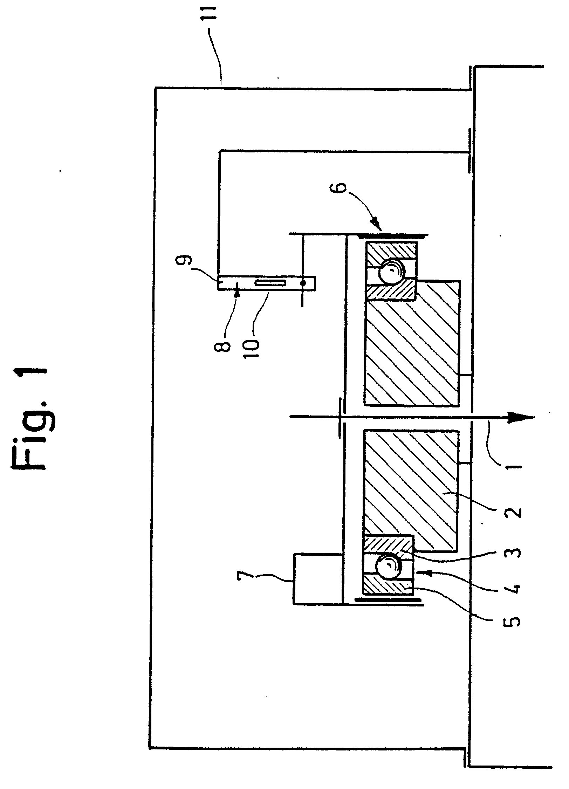

Die zur Bestimmung des Reibmomentes verwendete Meßvorrichtung der Figur 1 umfaßt eine um eine senkrechte Drehachse 1 drehbare Hohlwelle 2, an der der Innenring 3 eines nachfolgend als Meßlager 4 bezeichneten Kugellagers drehfest gehalten ist. Der Außenring 5 des Meßlagers 4 ist drehfest in einem Meßkopf 6 gehalten, der im dargestellten Ausführungsbeispiel die Form eines zylindrischen Deckels hat. In der Praxis hat dieser Deckel wesentlich größere Abmessungen als im dargestellten Ausführungsbeispiel, beispielsweise einen wesentlichen dickeren Boden, da sich in diesem Meßkopf zusätzliche Vorrichtungen befinden, beispielsweise hydraulische Spannelemente zum Simulieren von unterschiedlichen Temperaturausdehnungen der verschiedenen Teile des Meßlagers.

Der Meßkopf 6 wird durch das Meßlager 4 drehbar auf der Hohlwelle 2 gelagert. Die Hohlwelle 2 kann mittels eines in der Zeichnung nicht dargestellten Antriebes kontinuierlioh gedreht werden, beispielsweise mit einer Drehzahl von 1 bis 2 Umdrehungen pro Minute.

Auf dem Meßkopf 6 ist ein Beschleunigungsmesser 7 angeordnet, der ein der Drehbeschleunigung proportionales elektrisches Signal liefert.

Außerdem stützt sich der Meßkopf 6 an einer Biegefeder 8 ab, deren eines Ende 9 ortsfest gelagert ist. Die Biegefeder 8 ist so angeordnet, daß sie bei einer Verdrehung des Meßkopfes 6 aus einer Ruhelage heraus verbogen wird, den Meßkopf 6 also elastisch in die Ruhestellung zurückzudrehen sucht. Mit der Biegefeder sind Dehnungsmeßstreifen 10 verbunden, die ein der Verformung der Biegefeder 8 entsprechendes elektrisches Signal liefern.

Die Gesamtanordnung wird in einem Gefäß 11 angeordnet.

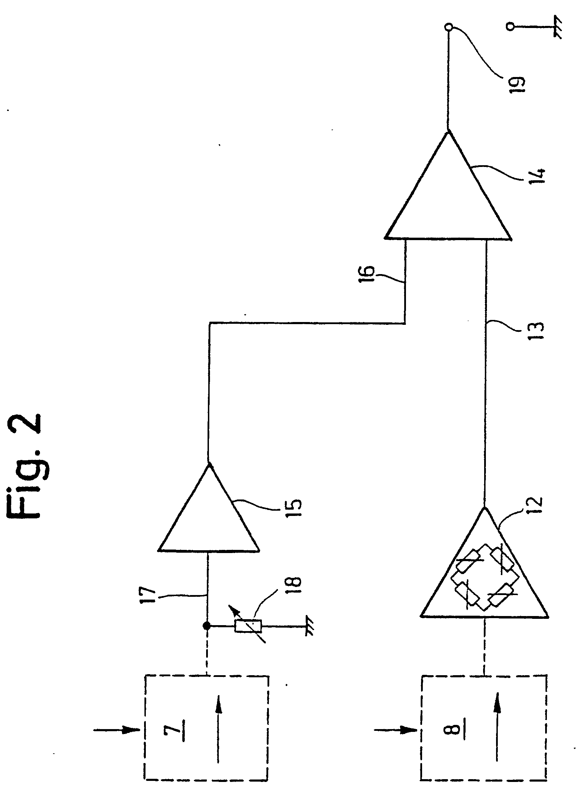

Die vom Beschleunigungsmesser 7 und vom Dehnungsmeßstreifen 10 erzeugten elektrischen Signale werden der in Figur 2 dargestellten elektrischen Schaltung zugeführt. Dabei wird die Durchbiegung der Feder über die Dehnungsmeßstreifen in einer Vollbrückenschaltung 12 in ein elektrisches Signal umgewandelt, das dem einen Eingang 13 eines Differenzverstärkers 14 zugeleitet wird.

Ein Signal des Beschleunigungsmessers 7, der wegen der verschwindenden unteren Grenzfrequenz vorzugsweise als Servobeschleunigungsaufnehmer ausgebildet ist, wird über einen Verstärker 15 dem anderen Eingang 16 des Differenzverstärkers 14 zugeführt. Der Eingang 17 des Verstärkers 15 ist über einen Regelwiderstand 18 mit Masse verbunden, so daß die Verstärkung des Verstärkers 15 verändert werden kann.

Die gesamte in Figur 1 dargestellte Anordnung bildet ein schwingungsfähiges System, welches der folgenden Gleichung gehorcht:

$$e \ddot{\varphi}(t) + \beta \dot{\varphi}(t) + D^* \varphi(t) = M_{Lager}(t) \qquad (I)$$

Dabei bedeuten:

$\theta$ : Trägheitsmoment des Meßaufnehmers
$\beta$ : Reibungskoeffizient
$D^*$: Federkonstante
$\phi(t)$: Winkellage des Meßkopfes als Funktion der Zeit
$\dot{\phi}(t)$: Winkelgeschwindigkeit des Meßkopfes als Funktion der Zeit
$\ddot{\phi}(t)$: Winkelbeschleunigung des Meßkopfes als Funktion der Zeit
$M_{Lager}(t)$ :Reibmoment des Meßlagers als Funktion der Zeit.

Die winkelgeschwindigkeitsproportionale Reibung oder Dämpfung des Meßkopfes beruht im wesentlichen ausschließlich auf der inneren Dämpfung der Biegefeder 8 und ist außerordentlich gering. Es ist daher möglich, das Reibungsglied $\beta \dot{\phi}(t)$ gegenüber den andern Gliedern zu vernachlässigen.

Der Federterm $D^* \phi(t)$ kann in einem statischen Versuch ohne weiteres kalibriert werden, beispielsweise indem man die Feder mit einer definierten Kraft mittels geeichter Gewichte verformt.

Um die Einflüsse des Trägheitsgliedes $\theta \quad \ddot{\phi}(t)$ berücksichtigen zu können, wird bei dem vorliegend beschriebenen Verfahren zunächst das Meßlager durch ein Luftlager ersetzt. Es handelt sich dabei um eine Lageranordnung mit einem dem Meßkopf 6 zugeordneten äußeren Teil und einem der Hohlwelle zugeordneten inneren Teil, die durch Ausströmen von Luft in gegenseitigem Abstand so gehalten werden, daß der Meßkopf 6 praktisch ohne Reibung gegenüber der Hohlwelle verdrehbar ist.

Bei einer solchen Anordnung wird die Lagerreibung $M_{Lager}(t)$ unmeßbar klein, so daß bei dieser Anordnung folgende Schwingungsgleichung gilt:

$$\theta \ddot{\varphi}(t) + D^* \varphi(t) = 0 \qquad (II)$$

Das elektrische Signal, das vom Beschleunigungsmesser 7 erzeugt wird, ist dem Trägheitsterm $\theta \quad \ddot{\phi}(t)$ proportional, das elektrische Signal der Dehnungsmeßstreifen auf der Biegefeder 8 dem Verformungsterm $D^* \phi(t)$. Wenn man diese beiden elektrischen Signale in ihrem gegenseitigen Verhältnis so einstellt, daß das Summensignal der beiden Signale Null gibt, entspricht das Verhalten der dann entstehenden elektrischen Signale genau der Schwingungsgleichung II des Systems. Dies läßt sich in einfacher Weise dadurch erreichen, daß man bei der Luftlageranordnung den Meßkopf anstößt, der dann eine freie Schwingung ausführt. Während dieser freien Schwingung verändert man die Größe des Regel-widerstandes 18 so, daß am Ausgang 19 des Differenzverstärkers 14 das Signal verschwindet. Man erhält also eine einfache Nullabgleichmethode, mit der praktisch gleichzeitig der Beschleunigungsterm im Verhältnis zum Federterm kalibrierbar ist.

Zur Messung des Reibmomentes eines Meßlagers wird dies nunmehr wieder anstelle des Luftlagers in die Anordnung eingesetzt, die Einstellung des Regelwiderstandes 18 bleibt dabei unverändert, so daß auch das Verhältnis der elektrischen Signale des Beschleunigungsmessers und der Dehnungsmeßstreifen der Biegefeder gleich bleibt. Es ist dann sichergestellt, daß zu jedem Zeitpunkt das Summensignal am Ausgang 19 des Differenzverstärkers 14 dem Reibmoment des Meßlagers proportional ist. Da der Federterm in der oben beschriebenen Weise statisch kalibrierbar ist und da durch die Nullabgleichmethode auch der Trägheitsterm in einfacher Weise kalibriert werden kann, ist es auf diese Weise auch möglich, aufgrund des Summensignals am Ausgang 19 des Differenzverstärkers 14 die absolute Größe des Meßlager-Reibungsmomentes zu bestimmen.

Bei einer solchen Messung führt der Meßkopf Drehschwingungen aus, wobei die Amplitude dieser Drehschwingungen in der Regel wesentlich größer sein wird als die Verdrehung, die dem Lager-Reibmoment entspricht. Der Einfluß dieser Schwingungen wird aber durch die beschriebene Verarbeitung der Signale des Beschleunigungsmessers einerseits und der Dehnungsmeßstreifen der Biegefeder andererseits so weit kompensiert, daß das verbleibende Summensignal am Ausgang 19 des Differenzverstärkers 14 von diesen großamplitudigen Schwingungen unbeeinflußt bleibt und nur proportional dem zeitlichen Verlauf des Meßlager-Reibmomentes sich ändert.

Mit der in Figur 1 dargestellten Anordnung läßt sich entsprechend der Grenzfrequenz des verwendeten Beschleunigungsaufnehmers beispielsweise eine Grenzfrequenz der Meßanordnung von ca. 300 Hz errei-chen.

## Ansprüche

1. Verfahren zur Bestimmung des Reibmoments eines Meßlagers (4), bei dem man einen Lagerring (3) des Meßlagers (4) mit konstanter Drehzahl dreht, während man den anderen Lagerring (5) über einen Meßkopf (6) mit einer als Kraftaufnehmer wirkenden Feder (8) verbindet, wobei der Kraftaufnehmer (8) ein Signal, das zur Bestimmung des Reibmoments des Meßlagers verwendet wird, erzeugt,

   **dadurch gekennzeichnet**

   daß man zur Kalibrierung der gesamten Meßeinrichtung das Meßlager (4) durch ein Luftlager ersetzt, daß der Meßkopf zu freien Schwingungen angeregt wird, daß man bei dieser Luftlageranordnung ein der Federverformung und ein der Meßkopfdrehbeschleunigung proportionales Signal erzeugt, daß man das Verhältnis der beiden Signale so einstellt, daß sie sich gegenseitig aufheben, und daß man bei der Reibmomentmessung des Meßlagers (4) bei unverändertem Verhältnis der beiden Signale das Summensignal der beiden Signale als Maß für das auftretende Reibmoment bestimmt.

## Claims

1. A method of determining the frictional torque of a measuring bearing (4), in which one bearing ring (3) of the measuring bearing (4) is turned at a constant speed of rotation, whilst the other bearing ring (5) is connected via a measuring head (6) to a spring (8) acting as a force absorber, the force absorber (8) producing a signal which is used to determine the frictional torque of the measuring bearing, characterised in that the measuring bearing (4) is replaced by an air bearing for the purpose of calibrating the whole measuring device, in that the measuring head is stimulated to oscillate freely, in that, in the case of this air bearing arrangement, a signal proportional to the deformation of the spring and a signal proportional to the angular acceleration of the measuring head are produced, in that the relationship between the two signals is set in such a way that they mutually cancel, and in that, when measuring the frictional torque of the measuring bearing (4) when the relationship between the two signals remains unchanged, the combined signal of the two signals is determined as a measurement for the frictional torque which occurs.

## Revendications

1. Procédé pour déterminer le moment de frottement d'un palier objet de mesure ou palier mesuré (4), selon lequel on tourne une bague (3) du palier mesuré (4) à vitesse constante, tandis qu'on relie l'autre bague (5) du palier par l'intermédiaire d'une tête de mesure (6) à un ressort agissant comme un capteur de force (8), le capteur de force (8) générant un signal utilisé pour déterminer le moment de frottement du palier mesuré,
caractérisé en ce que, pour calibrer l'ensemble du dispositif de mesure, on remplace le palier mesuré (4) par un palier d'air, que l'on excite la tête de mesure de manière qu'elle oscille librement, que l'on génère, avec ce dispositif à palier d'air, un signal proportionnel à la déformation du ressort et un signal proportionnel à l'accélération de rotation de la tête de mesure, que l'on ajuste le rapport des deux signaux de manière qu'ils s'annulent mutuellement et que, pour la mesure du moment de frottement du palier mesuré (4), alors que le rapport des deux signaux est inchangé, on détermine le signal somme des deux signaux en tant que mesure pour le moment de frottement produit.

# Fig. 1

# Fig. 2

EP 0 218 942 B1